# EUROPEAN PATENT SPECIFICATION

(11) **EP 4 097 784 B1**
(45) Date of publication and mention of the grant of the patent: **18.03.2026**
(21) Application number: 21701083.4
(22) Date of filing: 15.01.2021
(51) Int. Cl.: C25B 1/042, C25B 9/23, C25B 11/052, C25B 11/077, C25B 13/02, C25B 13/07, H01M 8/1213, H01M 8/1246, H01M 8/126, H01M 8/12

(54) **INTERLAYER FOR SOLID OXIDE CELL**
ZWISCHENSCHICHT FÜR FESTOXIDZELLE
COUCHE INTERMÉDIAIRE POUR PILE À OXYDE SOLIDE

(30) Priority: 27.01.2020 GB 202001139
(43) Date of publication of application: 07.12.2022
(73) Proprietor: Ceres Intellectual Property Company Limited, West Sussex RH13 5PX (GB)
(72) Inventor: MCKENNA, Fiona-Mairead, Horsham, West Sussex RH13 5PX (GB); RUSS, Michael, Horsham, West Sussex RH13 5PX (GB); LANKIN, Mike, Horsham, West Sussex RH13 5PX (GB)
(74) Representative: Script Intellectual Property LLP
(86) International application number: PCT/EP2021/050845
(87) International publication number: WO 2021/151692

(56) References cited:
- WO-A1-2009/073882
- WO-A1-2018/030691
- US-A1- 2003 027 033
- US-A1- 2014 038 069
- US-A1- 2018 026 292

## Description

The present invention is concerned with methods for the deposition of ceramic films on ceramic or metallic surfaces, particularly the deposition of sub-micron thickness ceramic films such as films of stabilised zirconia and doped ceria such as CGO (cerium gadolinium oxide).

The present invention is particularly useful in the manufacture of high and intermediate temperature operating cell units including solid oxide fuel cells (SOFC) and also metal supported intermediate temperature SOFC operating in the 450- 650 °C range.

A solid oxide electrolyser cell (SOEC) may have the same structure as an SOFC but is essentially that SOFC operating in reverse, or in a regenerative mode, to achieve the electrolysis of water and/or carbon dioxide by using the solid oxide electrolyte to produce hydrogen gas and/or carbon monoxide and oxygen.

The present invention is directed at an interlayer for a solid oxide fuel cell unit having a structure suitable for use as an SOEC or an SOFC. For convenience, SOEC or SOFC stack cell units will both hereinafter be referred to as "cell units" (i.e. meaning SOEC or SOFC stack cell units).

Fuel cells, fuel cell stack assemblies, fuel cell stack system assemblies and the like are well known in the prior art and relevant teachings include the likes of WO 02/35628, WO 03/075382, WO 2004/089848, WO 2005/078843, WO 2006/079800, WO 2006/106334, WO 2007/085863, WO 2007/110587, WO 2008/001119, WO 2008/003976, WO 2008/015461, WO 2008/053213, WO 2008/104760, and WO 2008/132493, all of which are incorporated herein by reference in their entirety.

There has been a drive over a number of years to lower the operating temperature of SOFCs (Solid Oxide Fuel Cells) from the traditional 800-1000°C, down to 600°C or below. It has been recognised that achieving this requires the use of a different set of materials from those traditionally used for SOFCs. In particular, this entails the use of cathode materials with increased catalytic activity and electrolyte materials with higher oxygen ion conductivity than the traditional yttria-stabilised zirconia (YSZ) when operating between 450-650 °C.

The higher-performance cathode materials are typically perovskite oxides based on cobalt oxide, such as LSCF (lanthanum strontium cobalt ferrite), LSC (lanthanum strontium cobaltite) and SSC (samarium strontium cobaltite). The more conductive electrolyte materials are typically either (i) rare-earth-doped ceria such as SDC (samarium-doped ceria) and GDC (gadolinium-doped ceria), or (ii) materials based on lanthanum gallate, such as LSGM (lanthanum-strontium-magnesium gallate).

The conductivity of zirconia can also be significantly improved by doping with scandia rather than yttria, although this is a more costly material.

Unfortunately, materials with higher performance at lower temperatures are frequently less stable than the traditional high-temperature materials. Particular problems frequently encountered are:
- High performance cathode materials react with zirconia to form strontium or lanthanum zirconate, which is a very poor ionic conductor, leading to performance degradation.
- LSGM reacts with nickel oxide which is normally found in the anode
- Doped ceria can be partially reduced when exposed to a fuel atmosphere, developing mixed ionic/electronic conductivity. This in turn causes the cell to develop an internal short-circuit, reducing operating efficiency.
- Doped ceria and zirconia can react if processed at temperatures in excess of 1200°C, producing a poorly conductive mixed phase.

To mitigate these undesirable material interactions, it is frequently desirable to have a composite electrolyte in which the electrolyte consists of a main layer and one or more interlayers. The main layer performs the primary functions of conducting oxygen ions from the cathode to the anode, and providing a gas-tight barrier to physically separate the reactants. The interlayer(s) are thin film(s) of another electrolyte material which separate the main electrolyte layer from one or both electrodes, preventing detrimental interactions. Typical uses of interlayers include:
- An interlayer of doped ceria deposited between a zirconia main electrolyte layer and a cobaltite cathode to avoid the formation of zirconates and to improve the catalytic activity of the cathode.
- An interlayer of doped ceria deposited between an LSGM main electrolyte and an anode to avoid reaction with nickel oxide found in the anode. It is known that production of a thin (<1000nm) even continuous impermeable film is not a straightforward process for cost effective fuel cell production. Material quality, reproducibility and process costs mean that traditional powder routes, sintering routes and plasma or vacuum spray deposition routes are not attractive for high-volume manufacture.

However, it is widely reported that the deposition of interlayers within an electrolyte can be difficult, particularly by means of conventional sintering processes. This is particularly the case if there is a requirement for the interlayer to be dense, or if there is a limit on the maximum permissible sintering temperature. Such limits apply if the cell is supported on a metal substrate (preferably sintering <1100°C), or when trying to sinter doped ceria and zirconia together without forming a non-conductive phase (preferably sintering <1200°C).

Thus, the deposition of interlayers within an electrolyte presents fundamental problems when it is desired for the interlayer to be dense, when the interlayer is to form part of a metal-supported solid oxide fuel cell, and where doped ceria and zirconia are to be sintered together. These problems are even more substantial when the interlayer is to be formed within an electrolyte of a metal-supported intermediate temperature solid oxide fuel cell, the maximum manufacturing process temperature being <1100 °C.

US 2017/146481A discloses a method for manufacturing an electrolyte for a SOFC, the method including applying a liquid containing nanoparticles and metal compounds to an electrode, decomposing the nanoparticles and metal compound to form a metal oxide film, and repeating steps of applying an decomposing to build up a layer thickness. However, application of this method to a metal-supported SOFC may result in metal ion species migration, at each of the decomposition steps, from the substrate into the fuel cell electrolyte and/or electrodes, which may be detrimental to their performance. Each of decomposition step also results in unnecessary oxide layer growth on the substrate.

US 2005/153171 discloses a method for production of a metal oxide layer in which a nanoparticle suspension is spun onto a substrate and dried. Subsequent layers may be added by repeating the spinning and drying steps. The accumulated layers are fired at high temperatures 1200-1400°C to form a metal oxide layer. However, the layers produced do not involve any ceramic component and so do not function as a cell unit. Furthermore, the required firing temperature is unsuitable for a metal-supported cell unit.

Applicant's earlier patent application WO2009/090419 discloses a method for depositing at least one layer of metal oxide crystalline ceramic upon a surface of a substrate the method comprising the steps of:
(i) depositing a solution of a soluble salt precursor of a metal oxide crystalline ceramic onto said surface of said substrate to define a layer of said solution of said soluble salt precursor on said surface, said surface being selected from the group consisting of: a metallic surface and a ceramic surface;
(ii) drying said solution of said soluble salt precursor to define a layer of said soluble salt precursor on said surface;
(iii) heating said soluble salt precursor on said surface to a temperature of between 150 and 600°C to decompose it and form a layer of metal oxide film on said surface;
(iv) repeating steps (i)-(iii) at least one additional time, said solution of said soluble salt precursor being deposited onto said metal oxide film, such that said metal oxide film on said surface comprises a plurality of layers of metal oxide; and
(v) firing said substrate with said metal oxide film on said surface at a temperature of 500-1100°C to crystallise said metal oxide film into a layer of metal oxide crystalline ceramic bonded to said surface of said substrate, wherein each of steps (ii), (iii) and (v) is performed in an air atmosphere.

Subsequent to the heating step (iii) and prior to the repeat of deposition step (i), the substrate and metal oxide film is cooled to below the decomposition temperature used in heating step (iii).

As discussed in WO2009/090419, each layer produced in steps (i)-(iii) is around 100-150nm thick. Steps (i)-(iii) are repeated to define a plurality of layers of metal oxide film on the surface. After the completion of steps (i)-(iv) the metal oxide film has a thickness of around 400-600 nm.

As further discussed in WO2009/090419, it is usually desired to provide a thicker layer of metal oxide crystalline ceramic, in which case it is possible to repeat steps (i)-(v), this time the surface being the layer of metal oxide crystalline ceramic previously produced. However, it is typically desirable to avoid additional sintering steps in order to avoid unnecessary metal ion species migration from the substrate into the fuel cell electrolyte and/or electrodes and also to avoid unnecessary oxide layer growth on the substrate.

WO2009/090419, discloses that by "solution" it is meant a true solution comprised of at least one substance (the solute) in at least one other substance (the solvent), i.e. excludes the presence of solid particles and thus excludes liquid colloidal dispersion, colloidal solutions, and mechanical suspensions. That document further discloses that experiments have shown that the presence of any solids in the layer of step (i) generate stress points which result in cracking and therefore loss of layer integrity, and that a layer made from a sol-gel mix or suspension containing solid particles will tend to dry an uneven way and also sinter in a non-homogeneous way with the suspension areas drying faster than those around the particle or gel, creating mechanical drying and annealing stresses which can lead to cracking.

Both drying and decomposition (heating step (iii)) lead to significant shrinkage of the layer of soluble salt precursor. If the layer is sufficiently thin, the shrinkage stresses that build up as a result of drying and/or decomposition do not result in cracking or mechanical failure and a dense, defect-free metal oxide film is formed. However, if the layer is too thick then the shrinkage stresses can lead to cracking or even delamination and thus failure of the resulting layer of metal oxide crystalline ceramic.

Further shrinkage occurs on crystallisation, and the maximum metal oxide film thickness which can be deposited and decomposed before a crystallisation is that required to avoid cracking on crystallisation. The metal oxide film thickness is determined by the number of successive depositions and decompositions performed before crystallisation, and the thickness of each of these layers is limited as described above.

The actual maximum allowable metal oxide film thickness before crystallisation may be determined by factors such as the material being deposited and its degree of shrinkage on crystallisation, the level of residual material such as carbon left behind from the decomposition process, and the evenness of the deposited layer.

Thus, it is desirable to have an interlayer deposition process that dries and anneals with low risk of cracking. The interlayer is made up of a plurality of sublayers. Each sublayer is associated with a manufacturing cost in terms of time and space. Thus, it is desirable to be able to deposit the interlayer thickness using the fewest number of sub-layers. As a result, there is a need for interlayer deposition processes that allow deposition of thicker sub-layers.

The present invention provides a method for depositing a ceramic film of a solid oxide cell unit upon a ceramic or metallic surface of a substrate, the method including the steps of: Providing a base suspension comprising a solution of a soluble salt precursor of a crystalline metal oxide ceramic and further comprising crystalline nanoparticles suspended therein; Depositing the base suspension on the surface of the substrate; Drying the base suspension to define a nanocomposite sub-layer of the soluble salt precursor and nanoparticles; Heating the sub-layer to decompose it and form a film of metal oxide comprising nanoparticles on the surface of the substrate; Firing the substrate with the film on the metal surface, to form a nanocomposite crystalline layer as a deposited ceramic film.

The solid oxide cell unit may be a cell unit of a SOFC or a SOEC. In an solid oxide cell (SOFC or SOEC), the use of a nanocomposite approach to fabricate a thin film of dense doped-zirconia on top of a CGO electrolyte by deposition of a solution of metal salts combined with a dispersion of electrochemically active or passive nanoparticles. Once dry, this forms a nanocomposite layer consisting of crystalline nanoparticles surrounded by amorphous organometallic matrix.

The film may be converted to a film of metal oxide by heat treatment to decompose the salts. The presence of nanoparticles provides reinforcement to the organometallic matrix, especially during the heat treatment to distribute the shrinkage-induced stresses that lead to cracking. Presence of the nanoparticles also reduces the amount of organic matter that needs to be removed in the heat treatment, thus reducing shrinkage-induced stresses that lead to cracking. The matrix provides a percolating network to enable ionic conductivity through the layer. Preferably, the nanoparticles will also exhibit ionic conductivity.

The surface of the substrate is selected from the group consisting of: a metallic surface and a ceramic surface. Thus, the base suspension may be deposited on the metal surface (which may be the metal support in a metal supported SOFC or SOEC) or on the ceramic surface (which may be the electrolyte of a SOFC or SOEC) by, for example, spraying, spin-coating, dip-coating, or ink-jet printing, and allowed to dry to form a thin film. The resulting nanocomposite layer may be thermally decomposed into an amorphous mixed oxide by thermal decomposition, this may be by use of an infrared heater. The process may be repeated sufficient times to build up a layer of, for example, approximately 600nm, and then the layer may be heat treated in a furnace at 500-1100°C to convert it to a crystalline layer of 10Sc1YSZ or 8YSZ. The whole process may be repeated to obtain a final film thickness of, for example, 1200nm.

The base suspension may comprise a solution of a soluble salt precursor of a metal oxide (crystalline) ceramic and crystalline nanoparticles at 5-30 mol%.

In an aspect, there is provided a method for depositing a ceramic film of a solid oxide cell unit upon a ceramic or metallic surface of a substrate. The method may include steps of: i. Providing a base suspension comprising a solution of a soluble salt precursor of a crystalline metal oxide ceramic and further comprising crystalline nanoparticles at 5-30mol% suspended therein; ii. Depositing the base suspension on the surface of the substrate; iii. Drying the base suspension to define a nanocomposite sub-layer of the soluble salt precursor and nanoparticles; iv. Heating the sub-layer to a temperature of between 150 and 600°C, to decompose it and form a film of metal oxide comprising nanoparticles on the surface of the substrate; v. Firing the substrate with the film on the surface at a temperature of 500 to 1100°C, to form a nanocomposite crystalline layer as a deposited ceramic film. In this way, the final nanocomposite layer may be composed of 5-30% nanoparticles by volume of the fired film.

The film so formed at step iv from the sub-layer may have a minimum thickness of 130nm. Due to the inherent nature of the nanocomposite, it is capable of yielding a thicker sub-layer in a single pass, so that the resulting final nanocomposite crystalline layer can be produced with a smaller number of passes.

Steps of depositing, drying, and heating. may be repeated at least one additional time before the step of firing, the base suspension being deposited onto the sub-layer, such that the film of metal oxide comprising nanoparticles is formed from a plurality of sub-layers

At the step of heating, the film so formed from each sub-layer may have a thickness of at least 130nm, preferably within the range of 150 to 500 nm, more preferably 150 to 200 nm, even more preferably 175 to 200 nm. In an example, the thickness of each sub-layer in the film has a thickness of 200-300nm.

The nanoparticles may comprise doped zirconia nanoparticles. In an example, the nanoparticles doped zirconium (IV) dioxide nanoparticles. In an example, the nanoparticles are yttria stabilized. In an example, the nanoparticles are 8YSZ or 10Sc1YSZ nanoparticles.

In the case that the nanoparticles are YSZ/yttria stabilized zirconia ((ZrO₂)₁₋ₓ(Y₂O₃)ₓ ), Stabilization of zirconium dioxide nanoparticles with yttria improves the microstructure of the sintered layer by encouraging cation mobility and enhancing sintering. YSZ, can offer the benefits of enabling thicker layers to be deposited while simultaneously offering ionic conductivity.

The nanoparticles may be spherical with an average diameter of between 1 and 100nm. In an example, they may have an average diameter of between 1 and 10 nm, preferably between 3 and 6 nm, more preferably between 3 and 5nm. In another example the nanoparticles may have average diameter of between 1 and 50nm, between 50 and 150nm or between 100 and 150nm.

In an example, the nanoparticles exhibit ionic conductivity. In an example the crystalline nanoparticles are dispersions in an aqueous solvent, and step of providing further comprises the sub-step of: solvent exchange of the nanoparticles into a non-aqueous media comprising the nanoparticles in suspension.

Solvent exchange describes process of changing the environment of the nanoparticle. This may involve the steps of, starting with nanoparticle in isopropanol or water, step 1: addition of ethylene glycol to the nanoparticle solution, a condensation reaction occurs to form water and a gel, an alternative to ethylene glycol is dipropylene glycol. During the condensation reaction, heat may be applied. The gel traps the nanoparticle in a structure which limits agglomeration and maintains particle size. Step 2: addition of acetic acid to reduce viscosity of the gel. Step 3: form a dispersion using EtOH (80%) and 1-methoxy-2-propanol, MEP (20%) and a binder, such that the nanoparticles are 5% by weight of resulting solution. This dispersion is stirred on hotplate. The binder may be polyvinyl butyral, for example Butvar^{®} B-76. Polyvinyl butyral is a thermoplastic, resin that offers a combination of properties for coating or adhesive applications. The use or addition of polyvinyl butyral to a system imparts adhesion, toughness, and flexibility. Other suitable potential binders include polyvinylpyrrolidone (PVP) and polyethylene glycol (PEG). In general any polymer system which is soluble in the solvents used and burns out cleanly without residue during heat treatment may be used.

In an example, the crystalline nanoparticles are dispersions in a non-aqueous solvent.In an example, the heating step involves heating the sub-layer to a temperature of between 150 and 600°C.

In an example, the firing at step v. is at a temperature of between 500 and 1100°C. In an example, the firing at step v. may be between 750 and 850°C, in another example the firing at step v. may be at around 800°C.

In an example, the the nanocomposite crystalline layer may be at least 90% dense. The nanocomposite crystalline layer may be at least 95% dense. The nanocomposite crystalline layer may be at least 97% dense.

In an example, the the surface of the substrate is an electrolyte layer. In an example, the surface is a mixed ionic electronic conducting electrolyte material. In an example, the surface is a CGO electrolyte layer.

In an example, the metal oxide crystalline ceramic is selected from the group consisting of: doped stabilised zirconia, and rare earth oxide doped ceria.

In an example, the metal oxide crystalline ceramic is selected from the group consisting of: scandia stabilised zirconia (ScSZ), yttria stabilised zirconia (YSZ), scandia ceria co-stabilised zirconia (ScCeSZ), scandia yttria co-stabilised zirconia (ScYSZ), ytterbia stabilized zirconia (YbSZ) samarium-doped ceria (SDC), gadolinium-doped ceria (GDC), praseodymium doped ceria (PDC), and samaria- gadolinia doped ceria (SGDC).

In an example, the soluble salt precursor is selected from at least one of the group consisting of: zirconium acetylacetonate, scandium nitrate, and yttrium nitrate, cerium nitrate, ytterbium nitrate, cerium acetylacetonate and gadolinium nitrate.

In an example, the solvent for said soluble salt precursor is selected from at least one of the group consisting of: methanol, ethanol, propanol, methoxypropanol, ethyl acetate, acetic acid, acetone and butyl carbitol.

In an example, the prior to step iii the step of allowing said solution deposited onto said surface to stand for a period of at least 5, 10, 15, 20, 25, 30, 35, 40, 45, 50, 55 or 60 seconds.

In an example, the method of forming an at least one layer of an air separation device electrolyte.

In an example, having deposited upon it at least one layer of metal oxide crystalline ceramic comprising nanoparticles according to the process of any of claims 1-15.

These and other features of the present invention will now be described in further detail, by way of various embodiments, and just by way of example, with reference to the accompanying drawings (which drawings are not to scale, and in which the height dimensions are generally exaggerated for clarity), in which:
Fig. 1 shows an example solid oxide cell layer structure that can be achieved with the method of the present invention.
Fig 2a is a high magnification top down SEM image of an interlayer and Fig 2b is a high magnification cross sectional SEM image of an interlayer achieved with the method of the present invention.

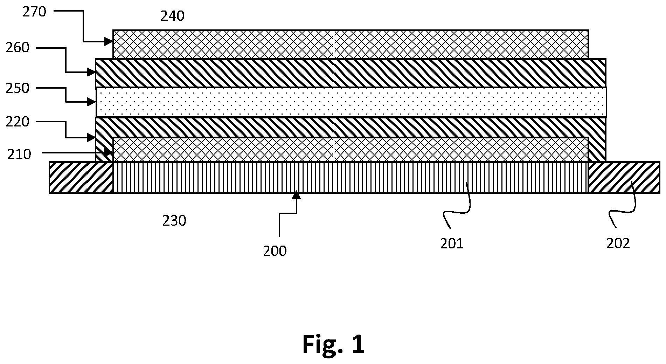

A ferritic stainless steel foil substrate 202 (as shown in e.g. Fig. 1) defining a perforated region 201 surrounded by a non-perforated region is provided upon which has been deposited an anode layer 210 and a gas impermeable, dense, CGO electrolyte layer 220 which is 10-15 micron thick on top of the anode layer, as taught in GB2434691 (foil substrate 4, anode layer 1a and electrolyte layer 1e) and WO 02/35628. In other embodiments (not shown) perforated foil substrates upon which is deposited an anode layer and a gas impermeable, dense electrolyte layer are used (GB2440038, GB2386126, GB2368450, US7261969, EP1353394, and US7045243). In a further embodiment (not shown) the graded metal substrate of US20070269701 is used.

The results of the method detailed above are shown in the following figures. Fig. 1 illustrates position of an interlayer in a metal-supported electrochemical cell, suitable for use as a SOFC or SOEC.

An nanocomposite crystalline layer comprising nanoparticles, is then formed on top of the CGO layer by performing steps (a)-(f) below. The interlayer 250 may also comprise crystalline ceramic scandia yttria co-stabilised zirconia (10Sc1YSZ; (Sc₂O₃)_{0.1}(Y₂ O₃)_{0.01}(ZrO₂)_{0.89}). The addition of 1% Yttria stabilises the material in the desired cubic fluorite crystal structure and helps avoid the crystallite phase instability which can occur in the ScSZ system, particularly a tendency to form rhombohedral crystals at around 500°C which have much lower oxygen ion conductivity that cubic ones.

The steps may be:
(a) air atomised spraying, jetting or ink-jet printing of a layer of base interlayer solution. The base interlayer solution being of 0.1 M cation concentration solution of Sc(NO₃)₃ and Y(NO₃)₃ and Zr(C₃H₇O₂) in 90% volume ethanol and 10% volume methoxypropanol (soluble salt precursors which will form the scandia yttria co-stabilised zirconia), and comprising 8YSZ or 10Sc1YSZ nanoparticles such that the final crystallised layer comprises 5-30% 8YSZ or 10Sc1YSZ nanoparticles by volume, at RTP onto the CGO layer. The base interlayer solution may comprise a solution of a soluble salt precursor of a metal oxide (crystalline) ceramic and crystalline nanoparticles at 5-30 mol%.
(b) drying the base interlayer solution at RTP in air for 60 seconds during which period the soluble salt precursor and nanoparticles even out across the surface, followed by further drying at 100 °C for 30 seconds. In an alternative, the step of drying may be undertaken at a slightly elevated temperature (e.g., 30-50°C) but for longer than 30 seconds.
(c) heating the base interlayer solution to >500 °C over a total period of 60 seconds using an infra-red (IR) heating lamp which decomposes and semi-crystalises the base soluble salt precursor it to form a layer about 200-400 nm thick of a semi-crystalline scandia yttria co-stabilised zirconia film comprising 8YSZ or 10Sc1YSZ nanoparticles.
(d) optionally repeating steps (a)-(c), the substrate and metal oxide film being cooled to a temperature of 35-80 °C prior to each repeat of step (a), to give a metal oxide and semi-crystalline film having a total thickness of about 500-600 nm. This film does not have any cracks in it and is suitable for further processing.
(e) firing at 800 °C for 60 minutes in air, the metal oxide film of scandia yttria co- stabilised zirconia forms a fully crystalline ceramic layer 250 of scandia yttria co- stabilised zirconia comprising nanoparticles, having a thickness of about 400-600 nm.
(f) optionally repeating steps (a)-(e) once more to achieve a final layer thickness of about 800-1200 nm

The next steps may be: (g) the repeating of steps (a)-(e) once more but this time depositing a layer 260 of CGO on top of the previously deposited crystalline ceramic layer of scandia yttria co- stabilised zirconia comprising nanoparicles. Example specific conditions are: 0.1 M cation concentration Ce(C₅H₇O₂) and gadolinium nitrate in 70% volume ethanol and 30% volume methoxypropanol and spraying, depositing and processing as before but using a final crystallisation firing temperature of 980°C to achieve a CGO layer with a final thickness of around 250 nm. This layer acts as a barrier layer between the scandia yttria co-stabilised zirconia layer and a subsequently deposited cathode layer 270.

(h) finally, a cathode layer 270 is then deposited on top of the previously deposited interlayer 250 or CGO layer 260. This may be done by screen-printing an LSCF cathode and processing it in accordance with WO2006/079800. This layer may have a thickness of about 50 µm.

The method may be used to manufacture the cell unit of Fig. 1. The cell unit may be a SOFC or SOEC. In Fig. 1 there is provided a ferritic stainless steel metal substrate 200 with an anode layer 210 on top of it and an electrolyte layer 220 are provided. Electrolyte layer 220 surrounds anode layer 210 in order to prevent gas flowing through anode 210 between fuel side 230 and oxidant side 240. Interlayer comprising nanoparticles (i.e. a nanocomposite interlayer) 250 is then deposited on top of ceramic CGO layer 220. The interlayer comprising nanoparticles may be Scandia yttria co-stabilised zirconia crystalline ceramic layer with yttria stabilized zirconia (YSZ) or 10Sc1YSZ nanoparticles. CGO crystalline ceramic layer 260 may then be deposited on top of interlayer 250. The spraying steps used in the deposition of layers 250 and 260 results in a "layer cake" type structure. Subsequent to the deposition of layers 250 and 260, the cell unit is completed with the addition of cathode assembly 270. If the cell unit is operated as a SOFC, the 240 represents the oxidant side and 230 represnets the fuel side.

The nanoparticles may be 8YSZ or 10Sc1YSZ nanoparticles having average particle size, as measured by TEM, of 1-10 nm. The nanoparticles are generally spherical, but need not be, the size quoted is the characteristic diameter of the particles. The nanoparticles may be 3-5nm in size. Equally, they may be 3-6nm, 1-10nm, 1-50nm, or 50-150 nm in size. Nanoparticles may, for example, be 8YSZ or 10Sc1YSZ particles formed by solvothermal processing supplied as a dispersion in isopropanol, which can be added directly to the interlayer salt solution to form a solution for deposition.

In other possible examples the nanoparticles could be 8YSZ or 10Sc1YSZ particles made by hydrothermal synthesis supplied in an acidified aqueous suspension. In this case it is necessary to perform a solvent exchange to transfer the particles to an organic solvent system before mixing them with the interlayer salt solution for deposition.

There are a number of possible methods for achieving a solvent exchange, but one of the simplest ones is to add a low-volatility polar solvent such as ethylene glycol or propylene glycol to the aqueous suspension and then heat the suspension to drive off the water, leaving the nanoparticles suspended in a gel with the glycol. The resulting gel can then be dispersed into the interlayer salt solution using high energy ultrasound before deposition.

Thus, the deposition method allows:
- depositition of 200-400 nm thickness interlayers in a single pass free of cracks and no obvious porosity.
- Starting from an already crystalline material (the nanoparticles) reduces the shrinkage/stress therefore reduce chances of cracking.

It is known that nanoparticles can be hard to densify especially at lower temperatures however the method results in a layer of higher density than prior art technique.

Comparison, by SEM, of an interlayer formed in accordance with the invention using just 4 passes (each sublayer being around 200nm thick after firing given that total interlayer is 800nm after firing) with interlayers formed using a prior art technique show pores (which are voids in the interlayer) . Many more pores are evident using the prior art technique. Thus, because of the pores, the prior art interlayers are of lower density than the interlayer formed with the method of the present invention. A dense interlayer is desired to improve the gas-impermeability of the electrolyte and interlayer, to prevent mixing of gasses on either side of the solid oxide cell. For example, in the case of a SOFC and with reference to Fig. 1, a high density interlayer prevents mixing of oxidant 240 with fuel 230.

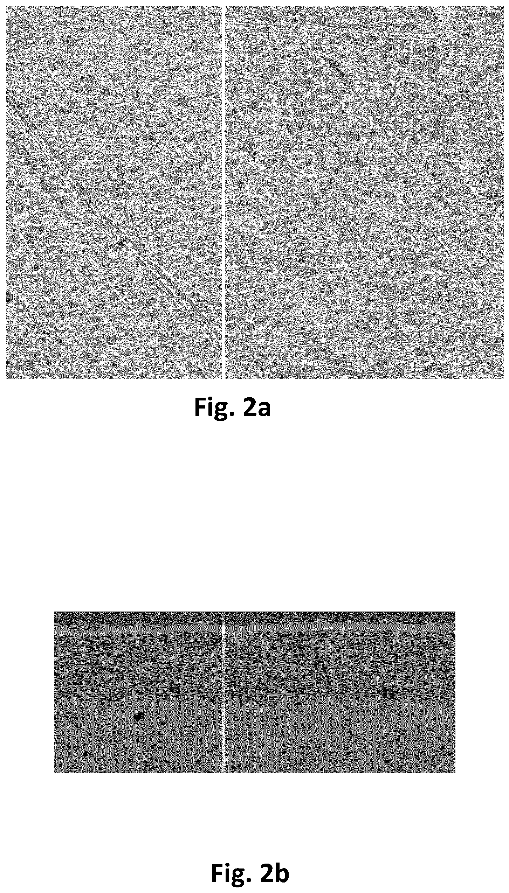

Fig 2 shows a interlayer achieved using the present invention. Fig 2a shows top down image of the interlayer. Fig 2a appears to show many dimples. However these are only apparent at very high magnification. Fig 2b is the same interlayer in cross section. Fig 2b demonstrates that the dimples are constrained to the surface and do not penetrate through the layer. Nanoporosity was observed, however, the pores are closed. This film has a film thickness of 750nm, achieved by a single pass (ie only one sublayer forms the interlayer). There are no cracks or defects that penetrated through the layer exposing the electrolyte.

These and other features of the present invention have been described above purely by way of example. Modifications in detail may be made to the invention within the scope of the claims.

## Claims

1. A method for depositing a ceramic film of a solid oxide cell unit upon a ceramic or metallic surface of a substrate, the method comprising the steps of:
i. Providing a base suspension comprising a solution of a soluble salt precursor of a crystalline metal oxide ceramic and further comprising crystalline nanoparticles suspended therein;
ii. Depositing the base suspension on the surface of the substrate;
iii. Drying the base suspension to define a nanocomposite sub-layer of the soluble salt precursor and nanoparticles;
iv. Heating the sub-layer to decompose it and form a film of metal oxide comprising nanoparticles on the surface of the substrate;
v. Firing the substrate with the film on the surface, to form a nanocomposite crystalline layer as a deposited ceramic film.

2. The method of claim 1, wherein at step iv, the film so formed from the sub-layer has a minimum thickness of 130nm.

3. The method of claim 1 or 2, further comprising:
vi. Repeating steps ii. to iv. at least one additional time before the step v of firing, the base suspension being deposited onto the sub-layer, such that the film of metal oxide comprising nanoparticles is formed from a plurality of sub-layers.

4. The method of claim 3, wherein at step iv, the film so formed from each sub-layer has a thickness of at least 130nm, preferably within the range of 150 to 500 nm, more preferably 150 to 200 nm, even more preferably 175 to 200 nm.

5. The method of any preceding claim, wherein the nanoparticles comprise doped zirconia nanoparticles, optionally wherein the nanoparticles are yttria stabilized, optionally wherein the nanoparticles are 8YSZ or 10Sc1YSZ nanoparticles.

6. The method of any preceding claim, wherein the nanoparticles exhibit ionic conductivity.

7. The method of any preceding claim, wherein crystalline nanoparticles are dispersions in an aqueous solvent, and step i. further comprises the sub-step of:
a. Solvent exchange of the nanoparticles into a non-aqueous media comprising the nanoparticles in suspension.

8. The method of any one of claims 1-7, wherein crystalline nanoparticles are dispersions in non-aqueous solvent.

9. The method of any preceding claim, wherein the heating step iv involves heating the sub-layer to a temperature of between 150 and 600°C.

10. The method of any preceding claim, wherein the firing at step v. is at a temperature of between 500 and 1100°C.

11. The method of any preceding claim, wherein the surface of the substrate is an electrolyte layer, optionally wherein the surface is a mixed ionic electronic conducting electrolyte material, optionally wherein the surface is a cerium gadolinium oxide (CGO) electrolyte layer.

12. The method of any preceding claim, wherein said metal oxide crystalline ceramic is selected from the group consisting of: doped stabilised zirconia, and rare earth oxide doped ceria, optionally wherein said metal oxide crystalline ceramic is selected from the group consisting of: scandia stabilised zirconia (ScSZ), yttria stabilised zirconia (YSZ), scandia ceria co-stabilised zirconia (ScCeSZ), scandia yttria co-stabilised zirconia (ScYSZ), ytterbia stabilized zirconia (YbSZ) samarium-doped ceria (SDC), gadolinium-doped ceria (GDC), praseodymium doped ceria (PDC), and samaria-gadolinia doped ceria (SGDC).

13. The method of any preceding claim, wherein said soluble salt precursor is selected from at least one of the group consisting of: zirconium acetylacetonate, scandium nitrate, and yttrium nitrate, cerium nitrate, ytterbium nitrate, cerium acetylacetonate and gadolinium nitrate; including or alternatively wherein the solvent for said soluble salt precursor is selected from at least one of the group consisting of: methanol, ethanol, propanol, methoxypropanol, ethyl acetate, acetic acid, acetone and butyl carbitol.

14. The method of any preceding claim, further comprising prior to step iii the step of allowing said suspension deposited onto said surface to stand for a period of at least 5, 10, 15, 20, 25, 30, 35, 40, 45, 50, 55 or 60 seconds.

15. The method of any preceding claim, being a method of forming at least one layer of a device having a gas-impermeable electrolyte.

## Patentansprüche

1. Verfahren zum Abscheiden eines keramischen Films einer Festoxid-Zelleneinheit auf einer keramischen oder metallischen Oberfläche eines Substrats, wobei das Verfahren die folgenden Schritte umfasst:
i. Bereitstellen einer Basis-Suspension, umfassend eine Lösung eines löslichen Salzvorläufers einer kristallinen Metalloxidkeramik und ferner umfassend darin suspendierte kristalline Nanopartikel;
ii. Abscheiden der Basis-Suspension auf der Oberfläche des Substrats;
iii. Trocknen der Basis-Suspension, um eine Nanokomposit-Teilschicht aus dem löslichen Salzvorläufer und Nanopartikeln zu definieren;
iv. Erwärmen der Teilschicht, um diese zu zersetzen und einen Nanopartikel umfassenden Metalloxidfilm auf der Oberfläche des Substrats zu bilden;
v. Brennen des Substrats mit dem Film an der Oberfläche, um eine kristalline Nanokompositschicht als abgeschiedenen Keramikfilm zu bilden.

2. Verfahren nach Anspruch 1, wobei bei Schritt iv, der so aus der Teilschicht gebildete Film eine Mindestdicke von 130 nm aufweist.

3. Verfahren nach Anspruch 1 oder 2, ferner umfassend:
vi. Wiederholen der Schritte ii. bis iv. mindestens ein weiteres Mal vor dem Schritt v des Brennens, wobei die Basis-Suspension auf der Teilschicht abgeschieden wird, sodass der Nanopartikel umfassende Metalloxidfilm aus einer Vielzahl von Teilschichten gebildet wird.

4. Verfahren nach Anspruch 3, wobei bei Schritt iv, der so aus den einzelnen Teilschichten gebildete Film eine Dicke von mindestens 130 nm, vorzugsweise in dem Bereich von 150 bis 500 nm, stärker bevorzugt 150 bis 200 nm, noch stärker bevorzugt 175 bis 200 nm aufweist.

5. Verfahren nach einem vorhergehenden Anspruch, wobei die Nanopartikel dotierte Zirkoniumdioxid-Nanopartikel umfassen, wobei optional die Nanopartikel Yttriumdioxidstabilisiert sind, wobei optional die Nanopartikel 8YSZ- oder 10Sc1YSZ-Nanopartikel sind.

6. Verfahren nach einem vorhergehenden Anspruch, wobei die Nanopartikel Ionenleitfähigkeit aufweisen.

7. Verfahren nach einem vorhergehenden Anspruch, wobei kristalline Nanopartikel Dispersionen in einem wässrigen Lösungsmittel sind und Schritt i. ferner den folgenden Teilschritt umfasst:
a. Lösungsmittelaustausch der Nanopartikel in ein nichtwässriges Medium, das die Nanopartikel in Suspension umfasst.

8. Verfahren nach einem der Ansprüche 1 bis 7, wobei kristalline Nanopartikel Dispersionen in nichtwässrigem Lösungsmittel sind.

9. Verfahren nach einem vorhergehenden Anspruch, wobei der Erwärmungsschritt iv das Erwärmen der Teilschicht auf eine Temperatur zwischen 150 und 600 °C beinhaltet.

10. Verfahren nach einem vorhergehenden Anspruch, wobei das Brennen bei Schritt v. bei einer Temperatur zwischen 500 und 1100 °C erfolgt.

11. Verfahren nach einem vorhergehenden Anspruch, wobei die Oberfläche des Substrats eine Elektrolytschicht ist, wobei optional die Oberfläche ein gemischt ionisches elektronisch leitendes Elektrolytmaterial ist, wobei optional die Oberfläche eine Cer-Gadoliniumoxid (CGO)-Elektrolytschicht ist.

12. Verfahren nach einem vorhergehenden Anspruch, wobei die kristalline Metalloxidkeramik ausgewählt ist aus der Gruppe bestehend aus: dotiertem stabilisiertem Zirkoniumdioxid und mit Seltenerdoxid dotiertem Cerdioxid, wobei die kristalline Metalloxidkeramik optional ausgewählt ist aus der Gruppe bestehend aus: mit Scandium stabilisiertem Zirkoniumdioxid (ScSZ), mit Yttriumdioxid stabilisiertem Zirkoniumdioxid (YSZ), mit Scandium-Cerdioxid co-stabilisiertem Zirkoniumdioxid (ScCeSZ), mit Scandium-Yttriumdioxid co-stabilisiertem Zirkoniumdioxid (ScYSZ), mit Ytterbium stabilisiertem Zirkoniumdioxid (YbSZ), mit Samarium dotiertem Cerdioxid (SDC), mit Gadolinium dotiertem Cerdioxid (GDC), mit Praseodym dotiertem Cerdioxid (PDC) und mit Samarium-Gadolinium dotiertem Cerdioxid (SGDC).

13. Verfahren nach einem vorhergehenden Anspruch, wobei der lösliche Salzvorläufer ausgewählt ist aus mindestens einem aus der Gruppe bestehend aus: Zirkoniumacetylacetonat, Scandiumnitrat und Yttriumnitrat, Cernitrat, Ytterbiumnitrat, Ceracetylacetonat und Gadoliniumnitrat; einschließlich oder alternativ, wobei das Lösungsmittel für den löslichen Salzvorläufer ausgewählt ist aus mindestens einem aus der Gruppe bestehend aus: Methanol, Ethanol, Propanol, Methoxypropanol, Ethylacetat, Essigsäure, Aceton und Butylcarbitol.

14. Verfahren nach einem vorhergehenden Anspruch, ferner umfassend vor Schritt iii den Schritt des Ruhenlassens der auf der Oberfläche abgeschiedenen Suspension für einen Zeitraum von mindestens 5, 10, 15, 20, 25, 30, 35, 40, 45, 50, 55 oder 60 Sekunden.

15. Verfahren nach einem vorhergehenden Anspruch, das ein Verfahren zum Bilden mindestens einer Schicht einer Vorrichtung mit einem gasundurchlässigen Elektrolyt ist.

## Revendications

1. Procédé permettant le dépôt d'un film céramique d'une unité de pile à oxyde solide sur une surface céramique ou métallique d'un substrat, le procédé comprenant les étapes de :
i. fourniture d'une suspension de base comprenant une solution d'un précurseur de sel soluble d'une céramique d'oxyde métallique cristallin et comprenant en outre des nanoparticules cristallines en suspension dans celle-ci ;
ii. dépôt de la suspension de base sur la surface du substrat ;
iii. séchage de la suspension de base pour définir une sous-couche nanocomposite du précurseur de sel soluble et des nanoparticules ;
iv. chauffage de la sous-couche pour la décomposer et former un film d'oxyde métallique comprenant des nanoparticules sur la surface du substrat ;
v. cuisson du substrat avec le film sur la surface, pour former une couche cristalline nanocomposite en tant que film céramique déposé.

2. Procédé de la revendication 1, dans lequel à l'étape iv, le film ainsi formé à partir de la sous-couche présente une épaisseur minimale de 130 nm.

3. Procédé de l'une des revendications 1 ou 2, comprenant en outre :
vi. la répétition des étapes ii. à iv. au moins une fois de plus avant l'étape v de cuisson, la suspension de base étant déposée sur la sous-couche, de sorte que le film d'oxyde métallique comprenant des nanoparticules soit formé à partir d'une pluralité de sous-couches.

4. Procédé de la revendication 3, dans lequel à l'étape iv, le film ainsi formé à partir de chaque sous-couche présente une épaisseur d'au moins 130 nm, de préférence dans la plage de 150 à 500 nm, idéalement de 150 à 200 nm, encore plus préférablement de 175 à 200 nm.

5. Procédé d'une quelconque revendication précédente, dans lequel les nanoparticules comprennent des nanoparticules d'oxyde de zirconium dopé, dans lequel éventuellement les nanoparticules sont stabilisées à l'oxyde d'yttrium, dans lequel éventuellement les nanoparticules sont des nanoparticules 8YSZ ou 10Sc1YSZ.

6. Procédé d'une quelconque revendication précédente, dans lequel les nanoparticules présentent une conductivité ionique.

7. Procédé d'une quelconque revendication précédente, dans lequel des nanoparticules cristallines sont des dispersions dans un solvant aqueux, et l'étape i. comprend en outre la sous-étape de :
a. échange de solvant des nanoparticules dans un milieu non aqueux comprenant les nanoparticules en suspension.

8. Procédé de l'une quelconque des revendications 1 à 7, dans lequel des nanoparticules cristallines sont des dispersions dans un solvant non aqueux.

9. Procédé d'une quelconque revendication précédente, dans lequel l'étape de chauffage iv implique le chauffage de la sous-couche à une température comprise entre 150 et 600 °C.

10. Procédé d'une quelconque revendication précédente, dans lequel la cuisson à l'étape v. s'effectue à une température comprise entre 500 et 1100 °C.

11. Procédé d'une quelconque revendication précédente, dans lequel la surface du substrat est une couche électrolytique, éventuellement dans lequel la surface est un matériau électrolytique à conduction ionique et électronique mixte, éventuellement dans lequel la surface est une couche électrolytique d'oxyde de cérium et de gadolinium (CGO).

12. Procédé d'une quelconque revendication précédente, dans lequel ladite céramique cristalline d'oxyde métallique est choisie dans le groupe constitué de : oxyde de zirconium dopé et stabilisé et oxyde de cérium dopé aux oxydes de terres rares, éventuellement dans lequel ladite céramique cristalline d'oxyde métallique est choisie dans le groupe constitué de : oxyde de zirconium stabilisé à l'oxyde de scandium (ScSZ), oxyde de zirconium stabilisé à l'oxyde d'yttrium (YSZ), oxyde de zirconium co-stabilisé à l'oxyde de scandium et à l'oxyde de cérium (ScCeSZ), oxyde de zirconium co-stabilisé à l'oxyde de scandium et à l'oxyde d'yttrium (ScYSZ), oxyde de zirconium stabilisé à l'oxyde d'ytterbium (YbSZ), oxyde de cérium dopé au samarium (SDC), oxyde de cérium dopé au gadolinium (GDC), oxyde de cérium dopé au praséodyme (PDC), et oxyde de cérium dopé à l'oxyde de samarium et à l'oxyde de gadolinium (SGDC).

13. Procédé d'une quelconque revendication précédente, dans lequel ledit précurseur de sel soluble est choisi parmi au moins l'un du groupe constitué par : l'acétylacétonate de zirconium, le nitrate de scandium et le nitrate d'yttrium, le nitrate de cérium, le nitrate d'ytterbium, l'acétylacétonate de cérium et le nitrate de gadolinium ; comprenant ou alternativement dans lequel le solvant dudit précurseur de sel soluble est choisi parmi au moins l'un du groupe constitué par : le méthanol, l'éthanol, le propanol, le méthoxypropanol, l'acétate d'éthyle, l'acide acétique, l'acétone et le butylcarbitol.

14. Procédé d'une quelconque revendication précédente, comprenant en outre, avant l'étape iii, l'étape consistant à laisser reposer ladite suspension déposée sur ladite surface pendant une période d'au moins 5, 10, 15, 20, 25, 30, 35, 40, 45, 50, 55 ou 60 secondes.

15. Procédé d'une quelconque revendication précédente, qui est un procédé de formation d'au moins une couche d'un dispositif comportant un électrolyte imperméable aux gaz.
